# EUROPEAN PATENT APPLICATION

(11) **EP 4 738 938 A1**
(43) Date of publication of application: **06.05.2026**
(21) Application number: 23942773.5
(22) Date of filing: 27.06.2023
(51) Int. Cl.: H04W 52/02

(54) **METHOD FOR CONFIGURING INDICATION INFORMATION, AND TERMINAL, AND NETWORK DEVICES**

(71) Applicant: Beijing Xiaomi Mobile Software Co., Ltd., Beijing 100085 (CN)
(72) Inventor: FU, Ting, Beijing 100085 (CN)
(74) Representative: Gunzelmann, Rainer
(86) International application number: PCT/CN2023/102970
(87) International publication number: WO 2025/000249

(57) **Abstract**

The present disclosure relates to a method for configuring indication information, and a terminal and a network device. The method comprises: a network device transmitting first information to a first terminal, the first information being configured to indicate the position of an indication bit, which corresponds to each carrier among at least one carrier configured for the first terminal, in second information corresponding to the first terminal, wherein the second information comprises at least one indication bit, the second information is configured to indicate whether to activate or deactivate a discontinuous reception mode or a discontinuous transmission mode of carriers configured for one or more terminals, and the one or more terminals comprise the first terminal. In the method disclosed in the present disclosure, a network device transmits first information to a first terminal so as to indicate to the first terminal the position of an indication bit of each carrier of the first terminal in corresponding second information, such that the first terminal can perform correct and efficient demodulation according to the first information and know the activation state of a discontinuous reception mode or a discontinuous transmission mode of each carrier.

## Description

### TECHNICAL FIELD

The disclosure relates to the field of communication technologies, and in particular to a method for configuring indication information, a user equipment (UE), and a network device.

### BACKGROUND

A network energy saving project aims to study technologies for reducing energy consumption of network devices. One possible network energy saving method involves a discontinuous transmission (DTX) mode or a discontinuous reception (DRX) mode of a base station of a cell.

### SUMMARY

A UE may be configured with a plurality of carriers, and each carrier may be configured with an identical or different discontinuous transmission and reception mode configuration. There lacks an effective way for a base station to indicate the discontinuous transmission and reception mode for the plurality of carriers.

The disclosure provides a method for configuring indication information, a UE, and a network device.

In a first aspect, the disclosure provides a method for configuring indication information. The method includes: sending, by a network device, first information to a first UE, in which the first information indicates a position of an indication bit corresponding to each of at least one carrier configured for the first UE in second information corresponding to the first UE; the second information includes at least one of the indication bits, and the second information indicates whether to activate or deactivate a discontinuous transmission and reception mode of one or more carriers configured for one or more UEs, and the one or more UEs include the first UE.

In a second aspect, the disclosure provides a method for configuring indication information. The method includes: receiving, by a first UE, first information sent by a network device, in which the first information indicates a position of an indication bit corresponding to each of at least one carrier configured for the first UE in second information corresponding to the first UE; the second information includes at least one of the indication bits, and the second information indicates whether to activate or deactivate a discontinuous transmission and reception mode of one or more carriers configured for one or more UEs, and the one or more UEs include the first UE.

In a third aspect, the disclosure provides a network device. The network device includes: a transceiver module, configured to send first information to a first UE, in which the first information indicates a position of an indication bit corresponding to each of at least one carrier configured for the first UE in second information corresponding to the first UE; the second information includes at least one of the indication bits, and the second information indicates whether to activate or deactivate a discontinuous transmission and reception mode of one or more carriers configured for one or more UEs, and the one or more UEs include the first UE; and a processing module, configured to configure the first information or the second information.

In a fourth aspect, the disclosure provides a UE. The UE includes: a transceiver module, configured to receive first information sent by a network device, in which the first information indicates a position of an indication bit corresponding to each of at least one carrier configured for the first UE in second information corresponding to the first UE; the second information includes at least one of the indication bits, and the second information indicates whether to activate or deactivate a discontinuous transmission and reception mode of one or more carriers configured for one or more UEs, and the one or more UEs include the first UE.

In a fifth aspect, the disclosure provides a network device. The network device includes: one or more processors; in which the network device is configured to execute the method according to the first aspect.

In a sixth aspect, the disclosure provides a UE. The UE includes: one or more processors; in which the UE is configured to execute the method according to the second aspect.

In a seventh aspect, the disclosure provides a communication system. The communication system includes: a network device, configured to execute the method according to the first aspect, and a UE, configured to execute the method according to the second aspect.

In an eighth aspect, the disclosure provides a storage medium. The storage medium stores instructions, in which the instructions, when executed on a communication device, cause the communication device to implement the method according to the first aspect, or to implement the method according to the second aspect.

According to the above aspects of the disclosure, the network device sends the first information to the first UE, in which the first information indicates the position of the indication bit of each carrier of the first UE in the second information corresponding to the first UE, so that the first UE may correctly and efficiently perform demodulation based on the first information and obtain an activation status of the discontinuous transmission and reception mode of each carrier.

### BRIEF DESCRIPTION OF THE DRAWINGS

In order to more clearly illustrate technical solutions in embodiments of the disclosure, the figures required for describing embodiments are introduced below. The following figures are merely some embodiments of the disclosure and do not specifically limit the scope of protection of the disclosure.
FIG. 1 is an exemplary schematic diagram illustrating an architecture of a communication system according to an embodiment of the disclosure.
FIG. 2a is an exemplary interaction flowchart illustrating a method for configuring indication information according to an embodiment of the disclosure.
FIG. 2b is a schematic diagram illustrating an information structure according to an embodiment of the disclosure.
FIG. 2c is a schematic diagram illustrating discontinuous transmission (DTX) according to an embodiment of the disclosure.
FIG. 3a is an exemplary flowchart illustrating a method for configuring indication information according to an embodiment of the disclosure.
FIG. 3b is an exemplary flowchart illustrating a method for configuring indication information according to an embodiment of the disclosure.
FIG. 3c is an exemplary flowchart illustrating a method for configuring indication information according to an embodiment of the disclosure.
FIG. 3d is an exemplary flowchart illustrating a method for configuring indication information according to an embodiment of the disclosure.
FIG. 4a is an exemplary flowchart illustrating a method for configuring indication information according to an embodiment of the disclosure.
FIG. 4b is an exemplary flowchart illustrating a method for configuring indication information according to an embodiment of the disclosure.
FIG. 4c is an exemplary flowchart illustrating a method for configuring indication information according to an embodiment of the disclosure.
FIG. 4d is an exemplary flowchart illustrating a method for configuring indication information according to an embodiment of the disclosure.
FIG. 5a is a block diagram illustrating a network device according to an embodiment of the disclosure.
FIG. 5b is a block diagram illustrating a UE according to an embodiment of the disclosure.
FIG. 6a is a block diagram illustrating a communication device according to an embodiment of the disclosure.
FIG. 6b is a block diagram illustrating a communication device according to an embodiment of the disclosure.

### DETAILED DESCRIPTION

The disclosure provides a method for configuring indication information, a UE, and a network device.

In a first aspect, the disclosure provides a method for configuring indication information. The method includes: sending, by a network device, first information to a first UE, in which the first information indicates a position of an indication bit corresponding to each of at least one carrier configured for the first UE in second information corresponding to the first UE; the second information includes at least one of the indication bits, and the second information indicates whether to activate or deactivate a discontinuous transmission and reception mode of one or more carriers configured for one or more UEs, and the one or more UEs include the first UE.

In the above embodiment, the network device sends the first information to the first UE, in which the first information indicates the position of the indication bit of each carrier of the first UE in the second information corresponding to the first UE, so that the first UE may correctly and efficiently perform demodulation based on the first information and obtain an activation status of the discontinuous transmission and reception mode of each carrier.

In combination with some embodiments of the first aspect, in some embodiments, the method further includes: sending, by the network device, third information to the first UE, in which the third information includes one or more pieces of the second information.

In the above embodiment, by sending the third information, the network device may send an activation indication or a deactivation indication to one or more UEs to indicate the activation status of the discontinuous transmission and reception mode of each carrier configured for the UEs. Thus, the plurality of UEs and the plurality of carriers of each UE may be indicated in one piece of third information, which effectively saves the number of bits occupied by the third information.

In combination with some embodiments of the first aspect, in some embodiments, the method further includes: sending, by the network device, fourth information to the first UE, in which the fourth information indicates a position of the second information corresponding to the first UE in the third information.

In the above embodiment, the network device may also indicate, by sending the fourth information, the position of the second information corresponding to the first UE in the third information to the first UE, so that the UE may quickly and accurately demodulate the second information corresponding to the UE, thus improving demodulation efficiency.

In combination with some embodiments of the first aspect, in some embodiments, a number of bits included in different pieces of the second information is identical or different.

In the above embodiment, different pieces of the second information may include an identical or different number of bits, so that each piece of second information may indicate a corresponding number of carriers, which is beneficial for effectively indicating the UE configured with different numbers of carriers.

In combination with some embodiments of the first aspect, in some embodiments, carriers corresponding to different pieces of the second information are completely identical, partially identical, or completely different.

In the above embodiment, carriers corresponding to different pieces of second information may be identical or different, so that when different UEs are configured with different carriers, effective interpretation may also be performed via the same third information.

In combination with some embodiments of the first aspect, in some embodiments, the second information includes a first number of indication bits, and a second number of carriers corresponding to the second information are configured for the first UE, and the first number is greater than or equal to the second number.

In the above embodiment, each piece of second information may indicate carriers configured for one or more UEs, which is beneficial for saving related signaling.

In combination with some embodiments of the first aspect, in some embodiments, the first information includes a third number of bits, and the third number is equal to the first number.

In the above embodiment, the number of bits in the first information is equal to the number of bits in the second information, which is beneficial for correspondingly indicating the indication bits in the second information via the bits in the first information.

In combination with some embodiments of the first aspect, in some embodiments, a position of an indication bit corresponding to at least one carrier in the second information, is indicated by a position of a bit with a first value in the first information, and the at least one carrier corresponds to the bit with the first value.

In the above embodiment, a bitmap manner may be utilized to map the position of the indication bit in the second information via the value of each bit in the first information, thus achieving position indication without occupying the second information, which is beneficial for reducing the total number of bits of the second information and the third information.

In combination with some embodiments of the first aspect, in some embodiments, the first information includes a fourth number of bits with the first value, and the fourth number is equal to the second number.

In the above embodiment, the number of bits with the first value in the first information is equal to the number of carriers configured for any UE, which is beneficial for indicating the position of the indication bit corresponding to the related carrier via the position of the related bit in the first information.

In combination with some embodiments of the first aspect, in some embodiments, the first information is sent via a higher layer signaling or a physical layer signaling.

In the above embodiment, the network device may send the first information via various signalings to flexibly indicate the position of the indication bit corresponding to each carrier of the UE in the second information.

In a second aspect, the disclosure provides a method for configuring indication information. The method includes: receiving, by a first UE, first information sent by a network device, in which the first information indicates a position of an indication bit corresponding to each of at least one carrier configured for the first UE in second information corresponding to the first UE; the second information includes at least one of the indication bits, and the second information indicates whether to activate or deactivate a discontinuous transmission and reception mode of one or more carriers configured for one or more UEs, and the one or more UEs include the first UE.

In the above embodiment, the first UE receives the first information sent by the network device and obtains the position of the indication bit of each carrier of the UE in the second information corresponding to the UE, so that the first UE may correctly and efficiently perform demodulation based on the first information and obtain an activation status of the discontinuous transmission and reception mode of each carrier.

In combination with some embodiments of the second aspect, in some embodiments, the method further includes: receiving, by the first UE, third information sent by the network device, in which the third information includes one or more pieces of the second information; determining, by the first UE, the position of the indication bit corresponding to each carrier in the second information corresponding to the first UE based on the first information; and determining, by the first UE, whether to activate the discontinuous transmission and reception mode of each carrier based on the indication bit corresponding to each carrier.

In combination with some embodiments of the second aspect, in some embodiments, the method further includes: receiving, by the first UE, fourth information sent by the network device, in which the fourth information indicates a position of the second information corresponding to the UE in the third information; and determining, by the first UE, the position of the second information corresponding to the first UE in the third information based on the fourth information.

In combination with some embodiments of the second aspect, in some embodiments, a number of bits included in different pieces of the second information is identical or different.

In combination with some embodiments of the second aspect, in some embodiments, carriers corresponding to different pieces of the second information are completely identical, partially identical, or completely different.

In combination with some embodiments of the second aspect, in some embodiments, the second information includes a first number of indication bits, and a second number of carriers are configured for the first UE, and the first number is greater than or equal to the second number.

In combination with some embodiments of the second aspect, in some embodiments, the first information includes a third number of bits, and the third number is equal to the first number.

In combination with some embodiments of the second aspect, in some embodiments, the method further includes: determining, by the first UE, a position of the indication bit corresponding to at least one carrier in the second information based on a position of a bit with a first value in the first information, in which the at least one carrier corresponds to the bit with the first value.

In combination with some embodiments of the second aspect, in some embodiments, the first information includes a fourth number of bits with the first value, and the fourth number is equal to the second number.

In combination with some embodiments of the second aspect, in some embodiments, the first UE receives the first information sent by the network device via a higher layer signaling or a physical layer signaling.

In a third aspect, the disclosure provides a network device. The network device includes: a transceiver module, configured to send first information to a first UE, in which the first information indicates a position of an indication bit corresponding to each of at least one carrier configured for the first UE in second information corresponding to the first UE; the second information includes at least one of the indication bits, and the second information indicates whether to activate or deactivate a discontinuous transmission and reception mode of one or more carriers configured for one or more UEs, and the one or more UEs include the first UE; and a processing module, configured to configure the first information or the second information.

In a fourth aspect, the disclosure provides a UE. The UE includes a first UE, including: a transceiver module, configured to receive first information sent by a network device, in which the first information indicates a position of an indication bit corresponding to each of at least one carrier configured for the first UE in second information corresponding to the first UE; the second information includes at least one of the indication bits, and the second information indicates whether to activate or deactivate a discontinuous transmission and reception mode of one or more carriers configured for one or more UEs, and the one or more UEs include the first UE.

In a fifth aspect, the disclosure provides a network device. The network device includes: one or more processors; in which the network device is configured to execute the method according to the first aspect.

In a sixth aspect, the disclosure provides a UE. The UE includes: one or more processors; in which the UE is configured to execute the method according to the second aspect.

In a seventh aspect, the disclosure provides a communication system. The communication system includes: a network device, configured to execute the method according to the first aspect, and a UE, configured to execute the method according to the second aspect.

In an eighth aspect, the disclosure provides a storage medium. The storage medium stores instructions, in which the instructions, when executed on a communication device, cause the communication device to implement the method according to the first aspect, or to implement the method according to the second aspect.

In a ninth aspect, embodiments of the disclosure provide a program product. When the program product is executed by a communication device, the communication device is caused to implement the methods for configuring indication information in optional implementations of the first aspect and the second aspect.

In a tenth aspect, embodiments of the disclosure provide a computer program. When the computer program is running on a computer, the computer is caused to implement the methods for configuring indication information in optional implementations of the first aspect and the second aspect.

In an eleventh aspect, embodiments of the disclosure provide a chip or a chip system. The chip or the chip system includes a processing circuitry configured to implement the methods for configuring indication information in optional implementations of the first aspect and the second aspect.

It may be understood that the UE, the network device, the communication system, the storage medium, the program product, the computer program and the chip or a chip system are all used to implement the method in embodiments of the disclosure. Thus, regarding beneficial effects they may achieve, reference may made be to the beneficial effects in the corresponding methods, which will not be repeated herein.

The disclosure provides a method for configuring indication information, a UE, and a network device.

Embodiments of the disclosure are not exhaustive, but are only illustrative, and are not intended to be a specific limitation on the protection scope of the disclosure. In the absence of contradiction, each step in a certain embodiment may be implemented as an independent embodiment, and respective steps may be arbitrarily combined. For example, a solution after removing some steps in a certain embodiment may also be implemented as an independent embodiment, and the order of the steps in a certain embodiment may be arbitrarily exchanged. In addition, the optional implementations in a certain embodiment may be arbitrarily combined; in addition, respective embodiments may be arbitrarily combined, for example, some or all steps of different embodiments may be arbitrarily combined, and a certain embodiment may be arbitrarily combined with the optional implementations of other embodiments.

In various embodiments of the disclosure, unless otherwise specified or there is a logical conflict, the terms, and/or descriptions between embodiments are consistent and may be referred to each other, and the technical features in different embodiments may be combined to form a new embodiment based on their internal logical relationships.

The terms used in embodiments of the disclosure are only for the purpose of describing specific embodiments and are not intended to limit the disclosure.

In embodiments of the disclosure, unless otherwise specified, elements expressed in the singular form, such as "a", "an", "the", "above", "said", "aforementioned", "this", etc., may mean "one and only one", or "one or more", "at least one", etc. For example, when using articles such as "a", "an", "the" in English translation, the noun after the article may be understood as a singular expression or a plural expression.

In embodiments of the disclosure, "a plurality of" refers to two or more.

In some embodiments, the terms "at least one of", "one or more", "a plurality of", "multiple" etc. may be used interchangeably.

In some embodiments, the descriptions such as "at least one of A, B", "A and/or B", "in one case, A; in another case, B", "in response to one case, A; in response to another case, B", etc. may include the following technical solutions according to situations: in some embodiments, A (A is executed independently of B); in some embodiments, B (B is executed independently of A); in some embodiments, one is selected from A and B to be executed (A and B are selectively executed); in some embodiments, A and B (both A and B are executed). When there are more branches such as A, B, C, etc., the above is applicable.

In some embodiments, the descriptions such as "A or B", etc. may include the following technical solutions according to situations: in some embodiments, A (A is executed independently of B); in some embodiments, B (B is executed independently of A); in some embodiments, one is selected from A and B to be executed (A and B are selectively executed). When there are more branches such as A, B, C, etc., the above is applicable.

The prefixes such as "first" and "second" in embodiments of the disclosure are only used to distinguish different descriptive objects, and do not constitute restrictions on the position, order, priority, quantity, or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a number of descriptive objects is not limited by the ordinal number, and may be one or more. Taking the "first apparatus" as an example, a number of "apparatuses" may be one or more. In addition, the objects modified by different prefixes may be the same or different. For example, if the descriptive object is "an apparatus", then the "first apparatus" and the "second apparatus" may be the same apparatus or different apparatuses, and their types may be the same or different. For another example, if the descriptive object is "information", then the "first information" and the "second information" may be the same information or different information, and their contents may be the same or different.

In some embodiments, "including A", "containing A", "used to indicate A", and "carrying A" may be interpreted as directly carrying A or indirectly indicating A.

In some embodiments, the terms such as "in response to...", "in response to determining...", "in the case of/that...", "at the time of...", "when...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be replaced with each other.

In some embodiments, the apparatus and device, etc. may be interpreted as physical or virtual, and their names are not limited to the names recorded in embodiments. The terms such as "apparatus", "equipment", "device", "circuit", "network element", "node", "function", "unit", "section", "system", "network", "chip", "chip system", "entity", and "subject" may be used interchangeably.

In some embodiments, the term such as "network" may be interpreted as an apparatus (e.g., an access network device, a core network device, etc.) included in the network.

In some embodiments, the "access network device (AN device)" may be referred as "radio access network device (RAN device)", "base station (BS)", "radio base station", "fixed station". In some embodiments, they may be understood as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)".

In some embodiments, the "terminal" or "terminal device" may be referred as "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like.

In some embodiments, the acquisition of data, information, etc. may comply with the laws and regulations of the country where the data is obtained.

In some embodiments, data, information, etc. may be obtained with the consent from users.

In addition, each element, each row, or each column in the table of embodiments of the disclosure may be implemented as an independent embodiment, and the combination of any elements, any rows, or any columns may also be implemented as an independent embodiment.

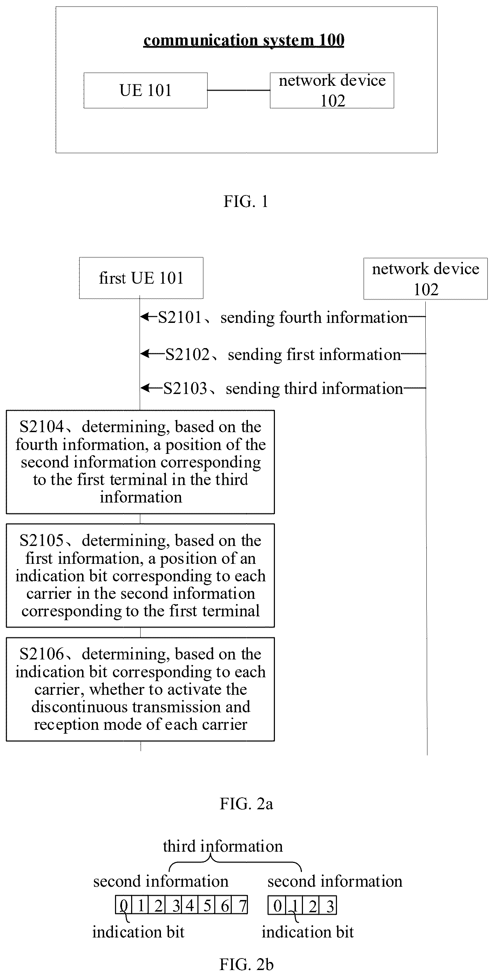

FIG. 1 is a schematic diagram illustrating an architecture of a communication system according to an embodiment of the disclosure.

As shown in FIG. 1, the communication system 100 includes a UE 101 and a network device 102. The UE 101 may be configured to, based on information sent by the network device 102, accurately demodulate an activation indication or a deactivation indication corresponding to each carrier in information for activating or deactivating a discontinuous transmission and reception mode of the plurality of carriers. The network device 102 may be configured to send information to the UE 101 to indicate positions of the activation indication or the deactivation indication, within information for activating or deactivating a discontinuous transmission and reception mode of a plurality of carriers corresponding to the UE 101, for different UEs 101 and for different carriers configured for each UE 101, thus facilitating the UE 101 to accurately and quickly demodulate the activation or deactivation indication corresponding to the UE. A communication connection may be established between the UE 101 and the network device 102, so that the UE 101 connects to the internet via the network device 102. For example, the network device 102 includes an access network device. The UE 101 connects to a core network device via the access network device, and further connects to the internet via the core network device.

In some embodiments, the UE 101, for example, may include at least one of a mobile phone, a wearable device, an Internet of Things device, a car with a communication function, a smart car, a Pad, a computer with a wireless receiving and sending function, a virtual reality (VR) UE, an augmented reality (AR) UE, a wireless UE in industrial control, a wireless UE in self-driving, a wireless UE in remote medical surgery, a wireless UE in smart grid, a wireless UE in transportation safety, a wireless UE in smart city, or a wireless UE in smart home, but is not limited herein.

In some embodiments, the network device includes at least one of: the access network device, or the core network device.

In some embodiments, the access network device may be, for example, a node or device that accesses a UE to a wireless network. The access network device may include at least one of an evolved NodeB (eNB), a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless fidelity (WiFi) system, but is not limited herein.

In some embodiments, the technical solution of the disclosure may be applicable to an Open RAN architecture. In this case, the interfaces between or within the access network devices involved in embodiments of the disclosure may become internal interfaces of the Open RAN, and the processes and information interactions between these internal interfaces may be implemented through software or programs.

In some embodiments, the access network device may include a central unit (CU) and a distributed unit (DU), in which the CU may also be called a control unit. A protocol layer of the access network device may be divided by adopting the CU-DU structure. Some functions of the protocol layer are centrally controlled by the CU, and some or all of remaining functions of the protocol layer are distributed in the DU which is centrally controlled by the CU, but is not limited herein.

In some embodiments, the core network device may be a device including one or more network elements, or may be a plurality of devices or device groups, each including all or part of one or more network elements. The network element may be virtual or physical. The core network may include, for example, at least one of an evolved packet core (EPC), a 5G core network (5GCN), or a next generation core (NGC).

It may be understood that the communication system described in embodiments of the disclosure aims to more clearly illustrate the technical solution of embodiments of the disclosure, and does not constitute a limitation on the technical solution disclosed in embodiments of the disclosure. A person skilled in the art may know that with the evolution of the system architecture and the emergence of new service scenarios, the technical solution disclosed in embodiments of the disclosure are also applicable to similar technical problems.

The following embodiments of the disclosure may be applied to the communication system 100 or part of the subjects shown in FIG. 1, but are not limited herein.

The subjects shown in FIG. 1 are examples, and the communication system may include all or part of the subjects in FIG. 1, or may include other subjects other than those shown in FIG. 1. The number and form of the subjects are arbitrary. The connection relationships between the subjects are examples. The subjects may be connected or disconnected, and the connection may be in any manner, which may be a direct connection or an indirect connection, or may be a wired connection or a wireless connection.

Embodiments of the disclosure may be applied to long term evolution (LTE), LTE-advanced (LTE-A), LTE-beyond (LTE-B), SUPER 3G, IMT-Advanced, a 4th generation mobile communication system (4G), a 5th generation mobile communication system (5G), 5G new radio (NR), future radio access (FRA), new radio access technology (RAT), new radio (NR), new radio access (NX), future generation radio access (FX), a global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a public land mobile network (PLMN) network, a device-to-device (D2D) system, a machine-to-machine (M2M) system, an internet of things (IoT) system, vehicle-to-everything (V2X), systems using other communication methods, and next-generation systems based on them. In addition, the plurality of systems may also be combined (for example, a combination of LTE or LTE-A and 5G, etc.) for application.

In embodiments of the disclosure, for a plurality of carriers of the UE 101, identical or different cell discontinuous transmission (DTX) or cell discontinuous reception (DRX) configurations may be respectively configured. The network device 102 may also use multicast for downlink control information (DCI) to dynamically activate or deactivate the cell DTX or the cell DRX on one or more carriers for the UE 101. After the network device 102 activates the cell DTX or the cell DRX for the UE on a certain carrier, the cell DTX or the cell DRX is turned on. After the base station deactivates the cell DTX or the cell DRX for the UE on a certain carrier, the cell DTX or the cell DRX is turned off.

In embodiments of the disclosure, a method for indicating activation or deactivation of cell DTX or DRX on a plurality of carriers for the plurality of UEs 101 is provided.

FIG. 2a is an interaction flowchart illustrating a method for configuring indication information according to an embodiment of the disclosure. As shown in FIG. 2a, embodiment of the disclosure relates to a method for configuring indication information. The method includes the following steps S2101 to S2106.

At step S2101, a network device 102 sends fourth information to a first UE 101.

It may be understood that the UE in the communication system shown in FIG. 1 may be the first UE 101.

In some embodiments, fourth information may be indication information or configuration information.

Optionally, the network device 102 sends the fourth information by sending a radio resource control (RRC) signaling.

Optionally, the network device 102 sends the fourth information to different UEs 101, or sends the fourth information only to the first UE 101, or the first UE 101 may be used to refer to any UE among different UEs or the plurality of UEs.

In some embodiments, the fourth information indicates a position of second information corresponding to the UE 101 in third information.

In some embodiments, the third information includes one or more pieces of second information.

Optionally, each piece of second information may correspond to one or more UEs 101, and the one or more UEs 101 include the first UE. The UE 101 may obtain the position of the second information corresponding to the UE in the third information based on the fourth information.

Optionally, a structure of the second information and the third information may also refer to FIG. 2b.

In some embodiments, the second information indicates whether to activate or deactivate a discontinuous transmission and reception mode of one or more carriers configured for one or more UEs 101.

Optionally, the discontinuous transmission and reception mode is at least one of: a DTX mode (DTX on-off pattern); or a DRX mode (DRX on-off pattern).

Optionally, each UE 101 may be configured with at least one carrier, and each carrier may be configured with the discontinuous transmission and reception mode. For example, each carrier is configured with the DTX mode, or is configured with the DRX mode, or is simultaneously configured with the DTX mode and the DRX mode.

Optionally, the discontinuous transmission and reception mode may be aperiodic or periodic.

For example, for an aperiodic discontinuous transmission and reception mode, the network device 102 may dynamically indicate a time-domain parameter of an active period of the discontinuous transmission and reception mode.

For example, for a periodic discontinuous transmission and reception mode, the network device 102 may configure, via a UE specific signaling, a time-domain parameter of the periodic discontinuous transmission and reception mode for each carrier of the UE 101. A period of the discontinuous transmission and reception mode may include a first time period and a second time period. The first time period is a time period during which the network device 102 is in a normal state of transmitting and receiving data, i.e., the network device 102 is in the active period. The first time period may also be called an on duration or an on period. The second time period is a time period during which the network device 102 may not perform transmission and reception of part of data, i.e., the network device 102 is in a non-active period. The second time period may also be called an off duration or an off period. It may be understood that, in the period of the discontinuous transmission and reception mode, besides the first time period, the active period may also include other time periods. For example, the active period includes: the first time period and a running period of a specific timer. The specific timer may, for example, include a retransmission-related timer running within the period.

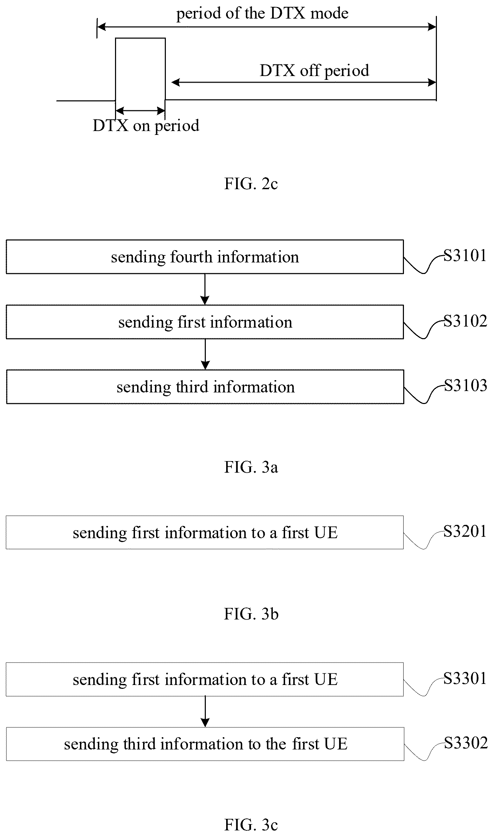

In an example, a period of the DTX mode includes a DTX-on period and a DTX-offperiod. Within the DTX-on period, the network device 102 may normally send downlink channels. Within the DTX-off period, the network device 102 may not send part of downlink channels, thus achieving energy saving for the network device. In the example, referring to the periodic DTX mode shown in FIG. 2c, the network device 102 may configure at least one of the following time-domain parameters of a cell DTX mode: a period, a time-domain offset, a duration of the DTX-on period, a duration of the DTX-off period. In the example, a behavior of the network device 102 during the period of the DTX mode may have an impact on a receiving behavior of the UE 101. For example, the UE 101 may not receive part of downlink channels during the DTX-off period.

In another example, a period of the DRX mode includes a DRX-on period and a DRX-off period. Within the DRX-on period, the network device 102 may normally receive uplink channels. Within the DRX-off period, the network device 102 may not receive part of uplink channels, thus achieving energy saving for the network device. In the example, the network device 102 may configure at least one of the following time-domain parameters of the DRX mode: a period, a time-domain offset, a duration of the DRX-on period, a duration of the DRX-off period. In the example, a behavior of the network device 102 during the DRX period may have an impact on a transmission behavior of the UE 101. For example, the UE 101 may suspend transmission or not transmit part of uplink channels during the DRX-off period.

Optionally, the network device 102 may configure a time-domain parameter related to the discontinuous transmission and reception mode on a per-carrier or per-cell basis. A carrier may also be understood as a cell. A configuration of DTX or a configuration of DRX is common to that cell.

In some embodiments, the UE 101, such as the first UE 101, receives the fourth information.

It needs to be noted that the term "a plurality of" referred to in embodiments of the disclosure may be two or more than two.

At step S2102, the network device 102 sends first information to the first UE 101.

In some embodiments, the first information indicates a position of an indication bit corresponding to each of at least one carrier configured for the UE 101 in the second information corresponding to the UE 101.

Optionally, the position is, for example, a bit position or a bit index in the second information.

Optionally, the network device 102 sends the first information to different UEs 101, or sends the first information only to the first UE 101, or the first UE 101 may be used to refer to any UE among the plurality of UEs.

In some embodiments, the second information includes at least one indication bit, and the second information indicates whether to activate or deactivate a discontinuous transmission and reception mode of one or more carriers configured for one or more UEs 101.

Optionally, the one or more UEs 101 include the first UE 101.

Optionally, each indication bit may occupy 1 or 2 bits. When a bit value of the indication bit corresponds to a specific value, the indication bit indicates activation of the discontinuous transmission and reception mode of the corresponding carrier of the UE 101. In a case that each indication bit occupies 1 bit, the 1 bit may indicate whether the cell DTX mode and/or the cell DRX mode of the corresponding carrier is activated. It may be understood that when the carrier is simultaneously configured with the cell DTX mode and the cell DRX mode, the 1 bit with the specific value may indicate simultaneous activation of the cell DTX mode and the cell DRX mode of the carrier. In a case that each indication bit includes 2 bits, one bit of the 2 bits indicates activation or deactivation of the cell DTX mode of the corresponding carrier, and the other bit of the 2 bits indicates activation or deactivation of the cell DRX mode of the corresponding carrier.

In some embodiments, the second information includes a first number M of indication bits, and a second number N of carriers corresponding to the second information are configured for the first UE. The first number M is greater than or equal to the second number N, and the one or more UEs include the first UE.

It may be understood that, in combination with the description of the above embodiments, the second information may correspond to one or more UEs, i.e., the second information may indicate whether the discontinuous transmission and reception mode of carriers configured for one or more UEs is activated or deactivated. The one or more UEs may include the first UE, a second UE, a third UE, etc. The first UE is used to refer to any UE among the one or more UEs.

In an example, each indication bit occupies 1 bit, the first UE 101 is configured with N carriers, the second information includes M indication bits, and M ≥ N. Among the M indication bits, there are N indication bits that correspond one-to-one with the N carriers. Among the N indication bits, a bit value of 1 indicates activation of the discontinuous transmission and reception mode of the carrier corresponding to the indication bit; and a bit value of 0 indicates deactivation of the discontinuous transmission and reception mode of the carrier corresponding to the indication bit.

In the example, the second information may also indicate carriers other than the N carriers, such as indicating whether the discontinuous transmission and reception mode of carriers configured for other UEs 101 is activated.

In another example, when each indication bit occupies 2 bits, the second information may include 2*M indication bits. The first UE 101 is configured with N carriers. Taking the indication bit corresponding to the N-th carrier as an example, when a value of a first bit in the indication bit is 1, the indication bit indicates activation of the cell DTX mode of the N-th carrier; when the value of the first bit is 0, the indication bit indicates deactivation of the cell DTX mode of the N-th carrier. When a value of a second bit in this indication bit is 1, the indication bit indicates activation of the cell DRX mode of the N-th carrier; when the value of the second bit is 0, the indication bit indicates deactivation of the cell DRX mode of the N-th carrier.

In some embodiments, the first information includes a third number M' of bits, the third number is equal to the first number, i.e., M' = M.

Optionally, the number of bits of the first information may be identical to the number of bits included in the second information, and the bits in the first information correspond one-to-one with the bits in the second information.

In some embodiments, a position of an indication bit corresponding to at least one carrier in the second information is indicated by a position of a bit with a first value in the first information, and the at least one carrier corresponds to the bit with the first value.

For example, the at least one carrier corresponds one-to-one with the bit with the first value.

Optionally, the network device may send corresponding first information to each UE. In the first information, a bit with the first value corresponds one-to-one with the at least one carrier configured for that UE.

Optionally, the first value may be 1. Among the M' bits of the first information, a bit with a bit value of 1 corresponds to a carrier of the UE 101. For example, a position of a bit with a bit value of 1 among the M' bits may be mapped to a position of an indication bit of a carrier of the UE 101 among the M bits of the second information.

In an example, the first information includes 4 bits (M'=4), and the second information includes 4 bits (M=4). When the 4 bits of the first information are 0110, it indicates that the indication bits corresponding to the carriers of the first UE 101 are at the 2nd bit and the 3rd bit in the second information. If the 4 bits of the second information are 0100, it indicates that the discontinuous transmission and reception mode of the carrier corresponding to the 2nd bit is activated, and the discontinuous transmission and reception mode of the carrier corresponding to the 3rd bit is deactivated.

In some embodiments, the position of the indication bit corresponding to the N carriers configured for the UE 101 may also be defined by protocol. For example, it may be defined by the protocol that the positions of the indication bits corresponding to the N carriers of the first UE 101 are: the first N bits in the second information corresponding to the first UE 101. It may be understood that the embodiment requires that when the plurality of UEs 101 in a cell is configured with a carrier aggregation (CA) configuration, the plurality of UEs 101 always try to configure an identical carrier set as much as possible. In embodiments, the balance of load on the plurality of carriers is relatively moderate.

In some embodiments, the first information includes a fourth number of bits with the first value, and the fourth number is equal to the second number.

Optionally, the fourth number is denoted as N', and the fourth number N' = the second number N.

In some embodiments, the first information may be sent via a higher layer signaling or a physical layer signaling.

For example, the network device 102 sends an RRC signaling or a media access control (MAC) control element (CE) signaling to the UE 101, and the RRC signaling or the MAC CE signaling includes the first information.

In some embodiments, the network device 102 may send the first information and the fourth information via an identical signaling.

At step S2103, the network device 102 sends the third information to the first UE 101.

In some embodiments, the third information includes one or more pieces of second information.

Optionally, each piece of second information may indicate whether the discontinuous transmission and reception mode of at least one carrier configured for at least one UE 101 is activated or deactivated.

Optionally, the second information may be indication information.

In some embodiments, among the one or more pieces of second information included in the third information, a number of bits included in different pieces of second information is identical or different.

In an example, the third information, such as DCI, includes two pieces of second information. A first piece of second information includes 8 indication bits, which may occupy 8 bits (M=8), and may indicate whether the discontinuous transmission and reception mode of 8 carriers is activated. A second piece of indication information includes 4 indication bits, which may occupy 4 bits (M=4), and may indicate whether the discontinuous transmission and reception mode of 4 carriers is activated.

In the example, the first piece of indication information may correspond to the first UE, or correspond to the first UE and a second UE. The second piece of indication information may correspond to a third UE, or correspond to the third UE and a fourth UE.

In some embodiments, carriers corresponding to different pieces of second information are completely identical, partially identical, or completely different.

For example, in combination with the above example, the first piece of indication information corresponds to 8 carriers, and the second piece of indication information corresponds to 4 carriers. The 4 carriers may be identical to part of the 8 carriers. For another example, a third piece of indication information corresponds to 4 carriers, and the 4 carriers may be completely identical to or completely different from the 4 carriers corresponding to the second piece of indication information.

In some embodiments, the third information may be multicast DCI.

Optionally, the network device 102 sends the third information to one or more UEs 101 by sending the multicast DCI.

In some embodiments, the UE 101, such as the first UE 101, receives the third information.

At step S2104, the first UE 101 determines, based on the fourth information, a position of the second information corresponding to the first UE 101 in the third information.

In some embodiments, the UE 101 obtains, based on the fourth information, the position of the second information corresponding to the UE in the third information, which facilitates demodulation of the second information corresponding to the UE.

At step S2105, the first UE 101 determines, based on the first information, a position of an indication bit corresponding to each carrier in the second information corresponding to the first UE.

In some embodiments, the UE 101 obtains, based on the first information, the position of the indication bit corresponding to each of at least one carrier configured for the UE 101 in the second information corresponding to the UE 101, which facilitates demodulation of the indication bit corresponding to each carrier.

At step S2106, the first UE 101 determines, based on the indication bit corresponding to each carrier, whether to activate the discontinuous transmission and reception mode of each carrier.

In some embodiments, for example, the indication bit occupies 1 bit, when the bit value is 1, it indicates activation of the discontinuous transmission and reception mode of the carrier corresponding to the bit; when the bit value is 0, it indicates deactivation of the discontinuous transmission and reception mode of the carrier corresponding to the bit.

In some embodiments, names of information and the like are not limited to the names recorded in embodiments. The terms such as "information", "message", "signal", "signaling", "report", "configuration", "indication", "instruction", "command", "channel", "parameter", "field" may be used interchangeably.

In some embodiments, "obtain", "acquire", "get", "receive", "transmit", "bidirectional transmission", "send and/or receive" may be interchangeable, and may be interpreted as many meanings such as receiving from other entities, obtaining from a protocol, obtaining from a higher layer, obtaining by self-processing, autonomous implementation, etc.

In some embodiments, the terms such as "send", "emit", "report", "issue", "transmit", "bi-directionally transmit", "send and/or receive" and the like may be used interchangeably.

In some embodiments, the terms such as "uplink", "physical uplink" may be used interchangeably. The terms such as "downlink", "physical downlink" may be used interchangeably. The terms such as "side", "sidelink", "side communication", "sidelink communication", "direct", "direct link", "direct communication", "direct link communication" may be used interchangeably.

In some embodiments, the terms such as "downlink control information (DCI)", "downlink (DL) assignment", "DL DCI", "uplink (UL) grant", "UL DCI" may be used interchangeably.

In some embodiments, the terms such as "physical downlink shared channel (PDSCH)", "DL data" may be used interchangeably. The terms such as "physical uplink shared channel (PUSCH)", "UL data" may be used interchangeably.

In some embodiments, the terms such as "component carrier (CC)", "cell", "frequency carrier", "carrier frequency" may be used interchangeably.

In some embodiments, the terms such as "certain", "preseted", "preset", "set", "indicated", "a", "any", "first", and the like may be used interchangeable. "Certain A", "preseted A", "preset A", "set A", "indicated A", "an A", "any A", "first A" may be interpreted as A predefined in a protocol, or as A obtained via setting, configuration, or indication, or as certain A, an A, any A, or first A, etc., but is not limited herein.

In some embodiments, the determination or judgment may be performed by a value (0 or 1) represented by 1 bit, or by a true/false value (Boolean value) represented by true or false, or by comparison of numerical values (for example, comparison with a predetermined value), but is not limited herein.

In some embodiments, "not expecting to receive" may be interpreted as not receiving on time domain resources and/or frequency domain resources, or as not performing subsequent processing on the data after receiving the data; "not expecting to send" may be interpreted as not sending, or as sending but not expecting the recipient to respond to the sent content.

The communication method in embodiments of the disclosure may include at least one of step S2101 to step S2106. For example, step S2101 may be implemented as an independent embodiment, step S2102 may be implemented as an independent embodiment, step S2103 may be implemented as an independent embodiment, step S2102, step S2103 and step S2105 may be implemented as an independent embodiment, and step S2102, step S2103, step S2105 and step S2106 may be implemented as an independent embodiment, which is not limited herein.

In some embodiments, step S2101 is optional, and one or more of the steps may be omitted or substituted in different embodiments. For example, step S2101 may be preconfigured.

In some embodiments, step S2101 and step S2103 may be performed in an alternative order or simultaneously.

In some embodiments, other optional implementations described before or after the description corresponding to FIG. 2a may be referred to.

In embodiments of the disclosure, the network device 102 sends at least one of the first information, the second information, the third information, or the fourth information to the first UE 101, so that the first UE 101, based on the information sent by the network device 102, may correctly locate the indication bit corresponding to the UE in the second information used for indicating activation or deactivation of the discontinuous transmission and reception mode of each carrier, and thus may quickly demodulate the activation or deactivation information corresponding to itself. Further, the network device 102 may send the first information to the plurality of UEs 101 via the multicast DCI. By configuring the multicast DCI, the DCI may indicate the activation status or the deactivation status of the cell DTX/the cell DRX for the plurality of UEs 101, where each UE is configured with multiple carriers, using as few bits as possible, thereby saving signaling resources.

FIG. 3a is an exemplary flowchart illustrating a method for configuring indication information according to an embodiment of the disclosure. As shown in FIG. 3a, embodiment of the disclosure relates to a method for configuring indication information. The method is performed by a network device 102, and includes the following steps S3101 to S3103.

At step S3101, the network device 102 sends fourth information.

In some embodiments, the implementation of step S3101 may refer to the related implementation of step S2101, which is not repeated herein.

In some embodiments, the network device 102 sends the fourth information to a plurality of UEs 101, in which the plurality of UEs 101 may include the first UE 101; or sends the fourth information to other entities.

At step S3102, the network device 102 sends first information.

In some embodiments, the implementation of step S3102 may refer to the related implementation of step S2102, which is not repeated herein.

In some embodiments, the network device 102 sends the first information to a plurality of UEs 101, in which the plurality of UEs 101 may include the first UE 101; or sends the first information to other entities.

At step S3103, the network device 102 sends third information.

In some embodiments, the implementation of step S3103 may refer to the related implementation of step S2103, which is not repeated herein.

In some embodiments, the network device 102 sends the third information to a plurality of UEs 101, in which the plurality of UEs 101 may include the first UE 101; or sends the third information to other entities.

The communication method in embodiments of the disclosure may include at least one of step S3101 to step S3103. For example, step S3101 may be implemented as an independent embodiment, step S3102 may be implemented as an independent embodiment, step S3103 may be implemented as an independent embodiment, step S3102 and step S3103 may be implemented as an independent embodiment, and step S3101 to step S3103 may be implemented as an independent embodiment, which is not limited herein.

In some embodiments, step S3101 is optional, and one or more of the steps may be omitted or substituted in different embodiments.

In some embodiments, other optional implementations described before or after the description corresponding to FIG. 3a may be referred to.

FIG. 3b is an exemplary flowchart illustrating a method for configuring indication information according to an embodiment of the disclosure. As shown in FIG. 3b, embodiment of the disclosure relates to a method for configuring indication information. The method is performed by a network device 102, and includes the following step S3201.

At step S3201, the network device 102 sends first information to a first UE 101.

In some embodiments, the implementation of step S3201 may refer to the related implementations of step S2102 and S3102, which is not repeated herein.

In some embodiments, the first information indicates a position of an indication bit corresponding to each of at least one carrier configured for the UE in second information corresponding to the UE.

In some embodiments, the second information includes at least one of the indication bits, and the second information indicates whether to activate or deactivate a discontinuous transmission and reception mode of one or more carriers configured for one or more UEs, and the one or more UEs include the first UE.

In some embodiments, a number of bits included in different pieces of the second information is identical or different.

In some embodiments, carriers corresponding to different pieces of the second information are completely identical, partially identical, or completely different.

In some embodiments, the second information includes a first number of indication bits, a second number of carriers corresponding to the second information are configured for the first UE, and the first number is greater than or equal to the second number. The one or more UEs include the first UE.

Optionally, the first information includes a third number of bits, and the third number is equal to the first number.

Optionally, a position of an indication bit corresponding to at least one carrier in the second information, is indicated by a position of a bit with a first value in the first information, and the at least one carrier corresponds to the bit with the first value.

Optionally, the first information includes a fourth number of bits with the first value, and the fourth number is equal to the second number.

In some embodiments, the first information is sent via a higher layer signaling or a physical layer signaling.

In embodiments of the disclosure, the network device 102 sends the first information to the UE 101, in which the first information indicates the position of the indication bit of each carrier of the UE 101 in the second information corresponding to the UE, so that the UE may correctly and efficiently perform demodulation based on the first information and obtain an activation status of the discontinuous transmission and reception mode of each carrier.

FIG. 3c is an exemplary flowchart illustrating a method for configuring indication information according to an embodiment of the disclosure. As shown in FIG. 3c, embodiment of the disclosure relates to a method for configuring indication information. The method is performed by a network device 102, and includes the following steps S3301 to S3302.

At step S3301, the network device 102 sends first information to a first UE 101.

In some embodiments, the implementation of step S3301 may refer to the related implementations of step S2102 and S3102, which is not repeated herein.

In some embodiments, the first information indicates a position of an indication bit corresponding to each of at least one carrier configured for the UE in second information corresponding to the UE.

In some embodiments, the second information includes at least one of the indication bits, and the second information indicates whether to activate or deactivate a discontinuous transmission and reception mode of one or more carriers configured for one or more UEs.

At step S3302, the network device 102 sends third information to the first UE 101.

In some embodiments, the implementation of step S3302 may refer to the related implementations of step S2103 and S3103, which is not repeated herein.

In some embodiments, the third information includes one or more pieces of second information.

In some embodiments, a number of bits included in different pieces of the second information is identical or different.

In some embodiments, carriers corresponding to different pieces of the second information are completely identical, partially identical, or completely different.

In some embodiments, the second information includes a first number of indication bits, a second number of carriers corresponding to the second information are configured for any UE, and the first number is greater than or equal to the second number.

Optionally, the first information includes a third number of bits, and the third number is equal to the first number.

Optionally, a position of an indication bit corresponding to a carrier in the second information, is indicated by a position of a bit with a first value in the first information.

Optionally, the first information includes a fourth number of bits with the first value, and the fourth number is equal to the second number.

In embodiments of the disclosure, by sending the third information, the network device may send an activation indication or a deactivation indication to one or more UEs to indicate the activation status of the discontinuous transmission and reception mode of each carrier configured for the UEs. Thus, the plurality of UEs and the plurality of carriers of each UE may be indicated in one piece of third information, which effectively saves the number of bits occupied by the third information.

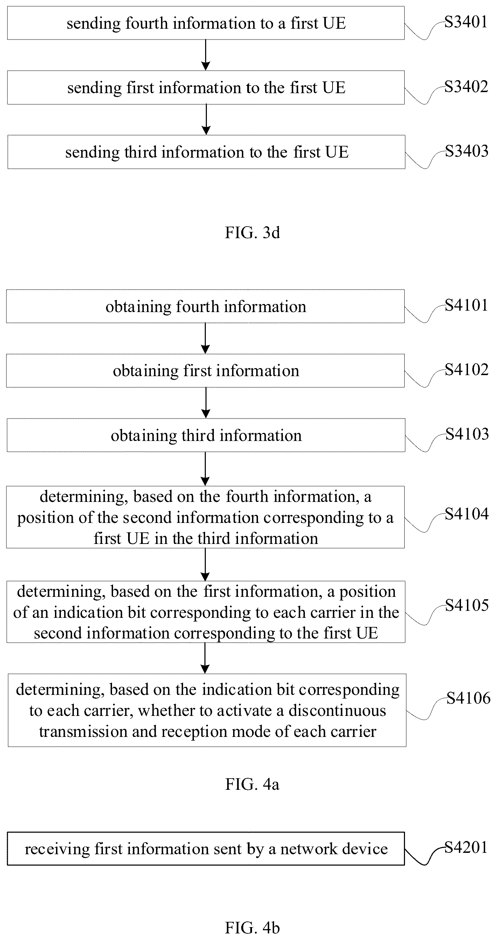

FIG. 3d is an exemplary flowchart illustrating a method for configuring indication information according to an embodiment of the disclosure. As shown in FIG. 3d, embodiment of the disclosure relates to a method for configuring indication information. The method is performed by a network device 102, and includes the following steps S3401 to S3404.

At step S3401, the network device 102 sends fourth information to a first UE 101.

In some embodiments, the implementation of step S3401 may refer to the related implementations of step S2101 and S3101, which is not repeated herein.

In some embodiments, the fourth information indicates a position of second information corresponding to the UE in third information.

At step S3402, the network device 102 sends first information to the first UE 101.

In some embodiments, the implementation of step S3402 may refer to the related implementations of step S2102 and S3102, which is not repeated herein.

In some embodiments, the first information indicates a position of an indication bit corresponding to each of at least one carrier configured for the UE in second information corresponding to the UE.

In some embodiments, the second information includes at least one of the indication bits, and the second information indicates whether to activate or deactivate a discontinuous transmission and reception mode of one or more carriers configured for one or more UEs.

At step S3403, the network device 102 sends third information to the first UE 101.

In some embodiments, the implementation of step S3403 may refer to the related implementations of step S2103 and S3103, which is not repeated herein.

In embodiments of the disclosure, the network device may also indicate, by sending the fourth information, the position of the second information corresponding to the UE in the third information to the UE, so that the UE may quickly and accurately demodulate the second information corresponding to the UE, thus improving demodulation efficiency.

FIG. 4a is an exemplary flowchart illustrating a method for configuring indication information according to an embodiment of the disclosure. As shown in FIG. 4a, embodiments of the disclosure relate to a method for configuring indication information. The method is performed by a first UE 101, and includes the following steps S4101 to S4106.

At step S4101, the first UE 101 obtains fourth information.

In some embodiments, the implementation of step S4101 may refer to the related implementation of step S2101.

In some embodiments, the first UE 101 may obtain the fourth information sent by the network device 102 or another entity.

At step S4102, the first UE 101 obtains first information.

In some embodiments, the implementation of step S4102 may refer to the related implementation of step S2102.

In some embodiments, the first UE 101 may obtain the first information sent by the network device 102 or another entity.

At step S4103, the first UE 101 obtains third information.

In some embodiments, the implementation of step S4103 may refer to the related implementation of step S2103.

In some embodiments, the first UE 101 may obtain the third information sent by the network device 102 or another entity.

At step S4104, the first UE 101 determines, based on the fourth information, a position of the second information corresponding to the first UE 101 in the third information.

In some embodiments, the implementation of step S4104 may refer to the related implementation of step S2104.

At step S4105, the first UE 101 determines, based on the first information, a position of an indication bit corresponding to each carrier in the second information corresponding to the first UE.

In some embodiments, the implementation of step S4105 may refer to the related implementation of step S2105.

At step S4106, the first UE 101 determines, based on the indication bit corresponding to each carrier, whether to activate a discontinuous transmission and reception mode of each carrier.

In some embodiments, the implementation of step S4106 may refer to the related implementation of step S2106.

The communication method in embodiments of the disclosure may include at least one of step S4101 to step S4106. For example, step S4101 may be implemented as an independent embodiment, step S4102 may be implemented as an independent embodiment, step S4103 may be implemented as an independent embodiment, step S4102 and step S4103 may be implemented as an independent embodiment, and step S4101 to step S4106 may be implemented as an independent embodiment, which is not limited herein.

In some embodiments, step S4101 is optional, and one or more of the steps may be omitted or substituted in different embodiments.

In some embodiments, other optional implementations described before or after the description corresponding to FIG. 4a may be referred to.

FIG. 4b is an exemplary flowchart illustrating a method for configuring indication information according to an embodiment of the disclosure. As shown in FIG. 4b, embodiment of the disclosure relates to a method for configuring indication information. The method is performed by a first UE 101, and includes the following step S4201.

At step S4201, the first UE 101 receives first information sent by the network device 102.

In some embodiments, the implementation of step S4201 may refer to the related implementations of step S4102 and S2102.

In some embodiments, the first information indicates a position of an indication bit corresponding to each of at least one carrier configured for the UE in second information corresponding to the UE.

In some embodiments, the second information includes at least one of the indication bits, and the second information indicates whether to activate or deactivate a discontinuous transmission and reception mode of one or more carriers configured for one or more UEs, and the one or more UEs include the first UE.

In some embodiments, a number of bits included in different pieces of the second information is identical or different.

In some embodiments, carriers corresponding to different pieces of the second information are completely identical, partially identical, or completely different.

In some embodiments, the second information includes a first number of indication bits, a second number of carriers are configured for the first UE, and the first number is greater than or equal to the second number.

In some embodiments, the first information includes a third number of bits, and the third number is equal to the first number.

Optionally, a position of an indication bit corresponding to a carrier in the second information is indicated by a position of a bit with a first value in the first information.

Optionally, the first information includes a fourth number of bits with the first value, and the fourth number is equal to the second number.

In some embodiments, the first information is sent via a higher layer signaling or a physical layer signaling.

In embodiments of the disclosure, the first UE receives the first information sent by the network device and obtains the position of the indication bit of each carrier of the UE in the second information corresponding to the UE, so that the first UE may correctly and efficiently perform demodulation based on the first information and obtain an activation status of the discontinuous transmission and reception mode of each carrier.

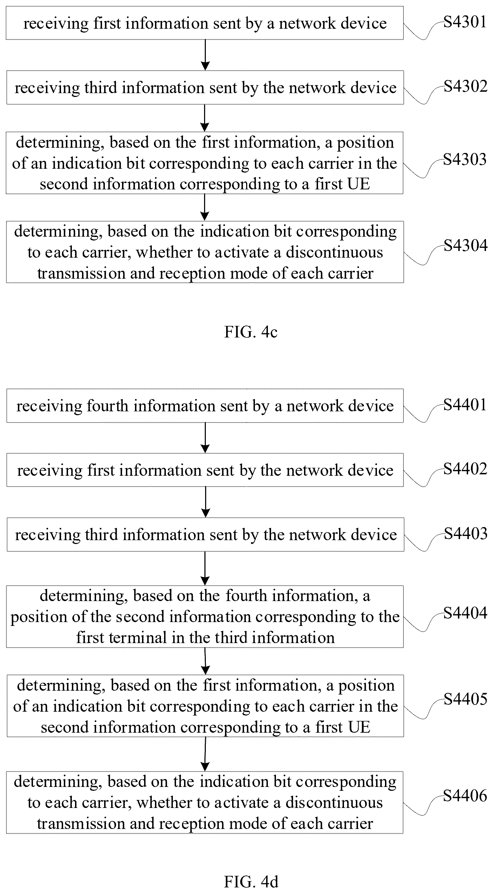

FIG. 4c is an exemplary flowchart illustrating a method for configuring indication information according to an embodiment of the disclosure. As shown in FIG. 4c, embodiment of the disclosure relates to a method for configuring indication information. The method is performed by a first UE 101, and includes the following steps S4301 to S4304.

At step S4301, the first UE 101 receives first information sent by the network device 102.

In some embodiments, the implementation of step S4301 may refer to the related implementations of step S2102 and S4102.

At step S4302, the first UE 101 receives third information sent by the network device 102.

In some embodiments, the implementation of step S4302 may refer to the related implementations of step S2103 and S4103.

In some embodiments, the third information includes one or more pieces of second information.

At step S4303, the first UE 101 determines, based on the first information, a position of an indication bit corresponding to each carrier in the second information corresponding to the first UE.

In some embodiments, the implementation of step S4303 may refer to the related implementations of step S2105 and S4105.

At step S4304, the first UE 101 determines, based on the indication bit corresponding to each carrier, whether to activate a discontinuous transmission and reception mode of each carrier.

In some embodiments, the implementation of step S4304 may refer to the related implementations of step S2106 and S4106.

FIG. 4d is an exemplary flowchart illustrating a method for configuring indication information according to an embodiment of the disclosure. As shown in FIG. 4d, embodiment of the disclosure relates to a method for configuring indication information. The method is performed by a first UE 101, and includes the following steps S4401 to S4406.

At step S4401, the first UE 101 receives fourth information sent by the network device 102.

In some embodiments, the implementation of step S4401 may refer to the related implementations of step S2101 and S4101.

At step S4402, the first UE 101 receives first information sent by the network device 102.

In some embodiments, the implementation of step S4402 may refer to the related implementations of step S2102 and S4102.

At step S4403, the first UE 101 receives third information sent by the network device 102.

In some embodiments, the implementation of step S4403 may refer to the related implementations of step S2103 and S4103.

In some embodiments, the third information includes one or more pieces of second information.

At step S4404, the first UE 101 determines, based on the fourth information, a position of the second information corresponding to the first UE 101 in the third information.

In some embodiments, the implementation of step S4404 may refer to the related implementations of step S2104 and S4104.

At step S4405, the first UE 101 determines, based on the first information, a position of an indication bit corresponding to each carrier in the second information corresponding to the first UE.

In some embodiments, the implementation of step S4405 may refer to the related implementations of step S2105 and S4105.

At step S4406, the first UE 101 determines, based on the indication bit corresponding to each carrier, whether to activate a discontinuous transmission and reception mode of each carrier.

In some embodiments, the implementation of step S4406 may refer to the related implementations of step S2106 and S4106.

In some embodiments, a number of bits included in different pieces of the second information is identical or different.

In some embodiments, carriers corresponding to different pieces of the second information are completely identical, partially identical, or completely different.

In some embodiments, the second information includes a first number of indication bits, a second number of carriers are configured for the first UE, and the first number is greater than or equal to the second number.

In some embodiments, the first information includes a third number of bits, and the third number is equal to the first number.

In some embodiments, the first UE determines, based on a position of a bit with a first value in the first information, a position of the indication bit corresponding to at least one carrier in the second information.

Optionally, the first information includes a fourth number of bits with the first value, and the fourth number is equal to the second number.

To facilitate understanding of embodiments of the disclosure, some specific examples are listed below.

### Example 1.

A base station indicates, to a UE, a bit position of N carriers corresponding to the UE in first indication information corresponding to the UE.

The first indication information includes a plurality of bits. The plurality of bits respectively correspond to an activation or deactivation indication of cell DTX/cell DRX of M carriers, in which M>=N.

For example, the first indication information may include M bits, with each bit corresponding to one of the M carriers; or, for another example, the first indication information may have 2*M bits, with every 2 bits corresponding to one of the M carriers.

In some embodiments, the first indication information corresponds to the second information in the above embodiments.

### Example 2.

The base station sends, to the UE via a higher layer signaling (such as RRC signaling or a MAC CE) or a physical layer signaling, the bit position of the N carriers in the first indication information.

Optionally, Example 2 is performed based on Example 1.

### Example 3.

The base station indicates position information of the N carriers in the first indication information via a bitmap manner.

For example, the bitmap is M bits, and bit=1 indicates that the carrier corresponding to the bit is a carrier corresponding to the UE, and bit=0 indicates that the carrier corresponding to the bit is not a carrier corresponding to the UE. Since the UE has N carriers, the number of bits where bit=1 in the bitmap information should be N.

Optionally, Example 3 is performed based on Example 1 or Example 2.

### Example 4.

DCI sent by the base station to a UE for indicating the cell DTX/the cell DRX activation or deactivation includes one or more pieces of first indication information. The base station configures a position of the first indication information corresponding to the UE among the one or more pieces of first indication information.

Optionally, numbers of bits (bit size) included in the plurality of pieces of first indication information may be different.

Optionally, the M carriers corresponding to different pieces of first indication information may be identical, partially identical, or completely different.

### Example 5.

It is defined by protocol that bit positions corresponding to the N carriers of the UE are the first N bits in the first indication information corresponding to the UE. This example requires that when the plurality of UEs in a cell perform CA configuration, the plurality of UEs always try to configure an identical carrier set as much as possible. This may lead to insufficiently balanced load on the plurality of carriers.

Based on any of the above examples, during implementation, the following two specific examples are listed.

In a first specific example, DCI used for indicating cell DTX/cell DRX activation or deactivation includes one piece of first indication information.

The first indication information includes activation or deactivation information of eight (M=8) carriers. The first indication information is 11001110, that is, among the eight carriers, the cell DTX/cell DRX is activated for the 1st, 2nd, 5th, 6th, and 7th carriers, and the cell DTX/cell DRX is not activated for the 3rd, 4th, and 8th carriers.

Both a UE1 and a UE2 under the cell correspond to the first indication information. The UE1 is configured with four (N1=4) serving carriers, corresponding to the 1st, 2nd, 3rd, and 4th carriers among the eight carriers respectively. The UE2 is configured with six (N2=6) carriers, corresponding to the 2nd, 3rd, 4th, 5th, 6th, and 7th carriers among the eight carriers respectively.

In the example, the base station indicates to the UE1 that a bit position of four carriers corresponding to the UE1 in the first indication is 11110000. The base station indicates to the UE2 that a bit position of six carriers corresponding to the UE2 in the first indication is 01111110. The UE1 learns, from the bit position information, that the activation status of cell DTX/cell DRX for the four carriers corresponding to the UE is 1100, that is, among the four serving carriers of UE1, the 1st and 2nd carriers are activated, and the 3rd and 4th carriers are not activated. (The same applies to UE2.)

In a second specific example, DCI used for indicating cell DTX/cell DRX activation or deactivation includes two pieces of first indication information.

A first piece of first indication information includes activation or deactivation information for a total of eight (M1=8) carriers. The first piece of first indication information is 11001110. A second piece of first indication information includes activation/deactivation information for a total of four (M2=4) carriers. The second piece of first indication information is 0110.

The base station configures a UE1 and a UE2 under the cell to both correspond to the first piece of first indication information. The base station configures a UE3 and a UE4 under the cell to both correspond to the second piece of first indication information.

In the example, the UE1 is configured with eight (N1=8) serving carriers, corresponding to all carriers among the eight carriers corresponding to the first piece of first indication information. The UE2 is configured with six (N2=6) carriers, corresponding to the 2nd, 3rd, 4th, 5th, 6th, and 7th carriers among the eight carriers corresponding to the first piece of first indication information.

The base station indicates to the UE1 that a bit position of eight carriers corresponding to the UE1 in the first indication information is 11111111. The base station indicates to the UE2 that a bit position of six carriers corresponding to the UE2 in the first indication information is 01111110. The UE1 learns, from the bit position information, that the activation status of cell DTX/cell DRX for the eight carriers corresponding to the UE1 is 11001110, that is, among the eight serving carriers, the 1st, 2nd, 5th, 6th, and 7th carriers are activated, and the 3rd, 4th, and 8th carriers are not activated. The UE2 learns, from the bit position information, that the activation status of cell DTX/cell DRX for the six carriers corresponding to the UE2 is 100111, that is, among the six serving carriers, the 1st, 4th, 5th, and 6th carriers are activated, and the 2nd and 3rd carriers are not activated.

In the example, the UE3 is configured with three (N3=3) serving carriers, corresponding to the 1st, 3rd, and 4th carriers among the four carriers corresponding to the second piece of first indication information. The UE4 is configured with two (N4=2) carriers, corresponding to the 3rd and 4th carriers among the four carriers corresponding to the second piece of first indication information.

The base station indicates to the UE3 that a bit position of three carriers corresponding to the UE3 in the first indication is 1011. The base station indicates to the UE4 that a bit position of two carriers corresponding to the UE4 in the first indication is 0011. The UE3 learns, from the bit position information, that the activation status of cell DTX/cell DRX for the three carriers corresponding to the UE3 is 010, that is, among the three serving carriers, the 2nd carrier is activated, and the 1st and 3rd carriers are not activated. The UE4 learns, from the bit position information, that the activation status of cell DTX/cell DRX for the two carriers corresponding to the UE4 is 10, that is, among its two serving carriers, the 1st carrier is activated, and the 2nd carrier is not activated.

Embodiments of the disclosure also provide an apparatus for implementing any one of the above methods. For example, an apparatus is provided, including units for performing the steps executed by the UE in any one of the above methods. Furthermore, another apparatus is provided, including units or modules for performing the steps executed by the network device (e.g., an access network device, a core network node, a core network device, etc.) in any one of the above methods.

It should be understood that a division of units in the above apparatus is only a division of logical functions. In actual implementations, they may be fully or partially integrated into one physical entity, or may be physically separated. In addition, the units or the modules in the apparatus may be implemented in a form of software called by the processor. For example, the apparatus includes a processor, in which the processor is connected to a memory storing instructions. The processor calls the instructions stored in the memory to implement any one of the above methods or to implement functions of the units or the modules of the above apparatus. The processor is, for example, a general-purpose processor, such as a central processing unit (CPU) or a microprocessor, and the memory is a memory inside the apparatus or a memory outside the apparatus. Or, the units or the modules in the apparatus may be implemented in a form of a hardware circuit. The functions of some or all units or modules may be implemented by designing the hardware circuit. The hardware circuit may be understood as one or more processors. For example, in an implementation, the hardware circuit is an application specific integrated circuit (ASIC). The functions of some or all units or modules are implemented by designing logical relationships of components within the circuit. In another implementation, the hardware circuit may be implemented by a programmable logic device (PLD). Taking a field-programmable gate array (FPGA) as an example, it may include a large number of logic gate circuits. The connection relationships between the logic gate circuits are configured via profiles to implement the functions of some or all units or modules. All units or modules of the above apparatus may be fully implemented in a form of software called by the processor, or fully implemented in a form of the hardware circuit, or partially implemented in a form of software called by the processor and partially implemented in a form of the hardware circuit.

In embodiments of the disclosure, the processor is a circuit with a signal processing capability. In an implementation, the processor may be a circuit with a capability to read and run instructions, such as a CPU, a microprocessor, a graphics processing unit (GPU) (which may be understood as a type of the microprocessor), a digital signal processor (DSP), etc. In another implementation, the processor may implement functions via a logical relationship of hardware circuits. The logical relationship of the hardware circuit is fixed or reconstructed, for example, a hardware circuit implemented by the ASIC or the PLD, such as the FPGA. In the reconstructed hardware circuit, a process that the processor loads the profiles to implement a hardware circuit configuration may be understood as a process that the processor loads the instructions to implement the functions of some or all units. Furthermore, it may also be a hardware circuit designed for artificial intelligence, which may be understood as a type of ASIC, such as a neural network processing unit (NPU), a tensor processing unit (TPU), a deep learning processing unit (DPU), etc.

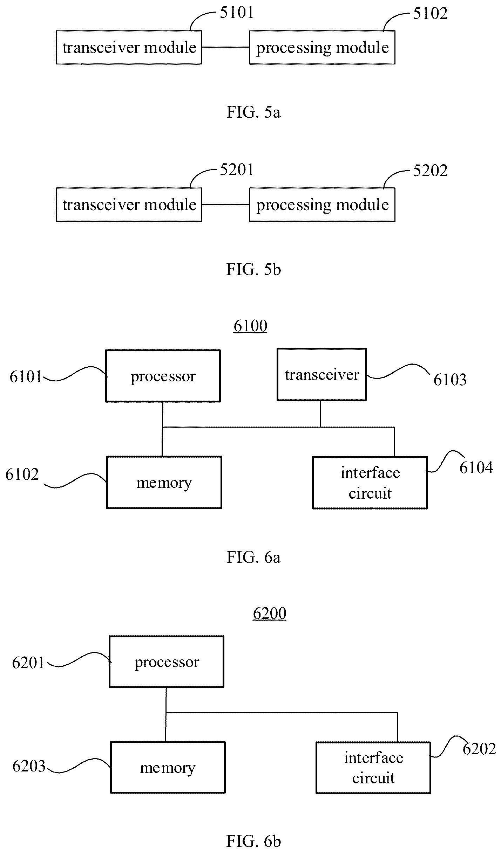

FIG. 5a is a block diagram illustrating a UE 5100 according to an embodiment of the disclosure. The UE may be the first UE. As shown in FIG. 5a, the UE 5100 may include at least one of: a transceiver module 5101, or a processing module 5102. In some embodiments, the transceiver module 5101 is configured to receive first information sent by a network device, in which the first information indicates a position of an indication bit corresponding to each of at least one carrier configured for the first UE in second information corresponding to the first UE; the second information includes at least one of the indication bits, and the second information indicates whether to activate or deactivate a discontinuous transmission and reception mode of one or more carriers configured for one or more UEs, and the one or more UEs include the first UE.

Optionally, the transceiver module 5101 is configured to perform at least one of the communication steps such as sending and/or receiving performed by the UE 101 in any of the above methods. For example, the transceiver module 5101 is further configured to perform one or more of steps S4301 and S4302, which is not repeated herein. Optionally, the processing module 5102 is configured to perform at least one of other steps performed by the UE 101 in any of the above methods. For example, the processing module 5102 is configured to perform at least one or more of steps S2104, S2105, and S2106, which is not repeated herein.

FIG. 5b is a block diagram illustrating a network device 5200 according to an embodiment of the disclosure. As shown in FIG. 5b, the network device 5200 may include at least one of: a transceiver module 5201, or a processing module 5202. In some embodiments, the transceiver module 5201 is configured to send first information to a first UE, in which the first information indicates a position of an indication bit corresponding to each of at least one carrier configured for the first UE in second information corresponding to the first UE; the second information includes at least one of the indication bits, and the second information indicates whether to activate or deactivate a discontinuous transmission and reception mode of one or more carriers configured for one or more UEs, and the one or more UEs include the first UE.

Optionally, the transceiver module 5201 is configured to perform at least one of the communication steps such as sending and/or receiving performed by the network device 102 in any of the above methods. For example, the transceiver module 5201 is further configured to perform one or more of steps S2101 and S2102, which is not repeated herein. Optionally, the processing module 5202 is configured to perform at least one of other steps performed by the network device 102 in any of the above methods. For example, the processing module 5202 is configured to perform at least one or more of steps of determining or configuring first information, determining or configuring second information, determining or configuring third information, and determining or configuring fourth information, which is not repeated herein.

In some embodiments, the transceiver module may include a sending module and/or a receiving module. The sending module and the receiving module may be separate or may be integrated. Optionally, the transceiver module may be interchangeable with a transceiver.

In some embodiments, the processing module may be a single module, or may include a plurality of sub-modules. Optionally, the plurality of sub-modules respectively perform all or part of the steps required to be performed by the processing module. Optionally, the processing module may be interchangeable with a processor.

FIG. 6a is a block diagram of a communication device 6100 according to an embodiment of the disclosure. The communication device 6100 may be a network device (such as an access network device, a core network device, etc.), or a UE (such as a UE, etc.), or a chip, a chip system, a processor, etc. that supports the network device to implement any one of the methods, or a chip, a chip system, a processor, etc. that supports the UE to implement any one of the methods. The communication device 6100 may be configured to implement the method in the above method embodiments. For details, please refer to the description in the above method embodiments.

As shown in FIG. 6a, the communication device 6100 may include one or more processors 6101. The processor 6101 may be a general purpose processor or a special purpose processor, for example, a baseband processor or a central processing unit. The baseband processor may be used to process communication protocols and communication data, and the central processing unit may be used to control communication apparatuses (such as a base station, a baseband chip, a UE, a UE chip, a DU or a CU, etc.), execute computer programs, and process computer program data. The communication device 6100 is configured to execute any one of the above methods.

Optionally, the communication device 6100 further includes one or more memories 6102 for storing instructions. Optionally, all or some of the memories 6102 may also be located outside the communication device 6100.

In some embodiments, the communication device 6100 further includes one or more transceivers 6103. When the communication device 6100 includes one or more transceivers 6103, the transceiver 6103 performs at least one of the communication steps such as sending and/or receiving in the above method (for example, step S2101, step S2102, but not limited herein), and the processor 6101 performs at least one of other steps (for example, step S2103, step S2104, S2105, but not limited herein).

In some embodiments, the transceiver may include a receiver and a transmitter, which may be separate or integrated together. Optionally, terms such as transceiver, transceiver unit, transceiving circuit, etc. may be used interchangeably; terms such as transmitter, transmission unit, transmitting circuit, etc. may be used interchangeably; and terms such as receiver, reception unit, receiving circuit, etc. may be used interchangeably.

In some embodiments, the communication device 6100 further includes one or more interface circuits 6104. Optionally, the interface circuit 6104 is connected to the memory 6102. The interface circuit 6104 may be configured to receive signals from the memory 6102 or other devices, and may be configured to send signals to the memory 6102 or other devices. For example, the interface circuit 6104 may read instructions stored in the memory 6102 and send the instructions to the processor 6101.

The communication device 6100 in the above embodiments may be a network device or a UE, but a scope of the communication device 6100 in the disclosure is not limited to this, and a structure of the communication device 6100 may not be limited by FIG. 6a. The communication device may be an independent device or a part of a larger device. For example, the communication device may be: 1) an independent IC, or a chip, or a chip system or a subsystem; 2) a collection including one or more IC, optionally, the IC collection may also include storage components for storing data and computer programs; 3) an ASIC, such as a modem; 4) modules embedded in other devices; 5) a receiver, a UE, an intelligent UE, a cellular phone, a wireless device, a handheld phone, a mobile unit, a vehicle-mounted device, a network device, a cloud device, an artificial intelligence device, etc.; 6) others.

FIG. 6b is a block diagram of a chip 6200 according to an embodiment of the disclosure. For a case where the communication device 6100 may be a chip or a chip system, reference may be made to the block diagram of the chip 6200 shown in FIG. 6b, but not limited to this.

The chip 6200 includes one or more processors 6201. The chip 6200 is configured to execute any one of the above methods.

In some embodiments, the chip 6200 further includes one or more interface circuits 6202. The interface circuit 6202 is connected to a memory 6203. The interface circuit 6202 may be configured to receive signals from the memory 6203 or other devices, and may be configured to send signals to the memory 6203 or other devices. For example, the interface circuit 6202 may read the instructions stored in the memory 6203 and send the instructions to the processor 6201.

In some embodiments, the interface circuit 6202 performs at least one of the communication steps such as sending and/or receiving in the above method (for example, step S2101, step S2102, but not limited herein), and the processor 6201 performs at least one of other steps (for example, step S2103, step S2104, S2105, but not limited herein).

In some embodiments, terms such as interface circuit, interface, transceiver pin, transceiver, etc. may be used interchangeably.

In some embodiments, the chip 6200 further includes one or more memories 6203 for storing instructions. Optionally, all or some of the memories 6203 may be located outside the chip 6200.

The disclosure also provides a storage medium for storing instructions. When the instructions are running on the communication device 6100, the communication device 6100 is caused to implement any one of the above methods. Optionally, the above storage medium is an electronic storage medium. Optionally, the above storage medium is a computer-readable storage medium, which is not limited to this, and the above storage medium may also be a storage medium readable by other devices. Optionally, the above storage medium may be a non-transitory storage medium, which is not limited to this, and the above storage medium may also be a transitory storage medium.

The disclosure also provides a program product. When the program product is executed by the communication device 6100, the communication device 6100 is caused to implement any one of the above methods. Optionally, the above program product is a computer program product.

The disclosure also provides a computer program. When the computer program is running on a computer, the computer is caused to implement any one of the above methods.

### INDUSTRIAL UTILITY

In the method of the disclosure, the network device sends the first information to the first UE, in which the first information indicates the position of the indication bit of each carrier of the first UE in the second information corresponding to the first UE, so that the first UE may correctly and efficiently perform demodulation based on the first information and obtain an activation status of the discontinuous transmission and reception mode of each carrier.

## Claims

1. A method for configuring indication information, comprising:
sending, by a network device, first information to a first user equipment (UE), wherein the first information indicates a position of an indication bit corresponding to each of at least one carrier configured for the first UE in second information corresponding to the first UE; and
the second information comprises at least one of the indication bits, and the second information indicates whether to activate or deactivate a discontinuous transmission and reception mode of one or more carriers configured for one or more UEs, and the one or more UEs comprise the first UE.

2. The method according to claim 1, further comprising:
sending, by the network device, third information to the first UE, wherein the third information comprises one or more pieces of the second information.

3. The method according to claim 2, further comprising:
sending, by the network device, fourth information to the first UE, wherein the fourth information indicates a position of the second information corresponding to the first UE in the third information.

4. The method according to claim 2, wherein a number of bits comprised in different pieces of the second information is identical or different.

5. The method according to claim 2, wherein carriers corresponding to different pieces of the second information are completely identical, partially identical, or completely different.

6. The method according to any one of claims 1 to 5, wherein the second information comprises a first number of indication bits, and a second number of carriers corresponding to the second information are configured for the first UE, and the first number is greater than or equal to the second number.

7. The method according to claim 6, wherein the first information comprises a third number of bits, and the third number is equal to the first number.

8. The method according to claim 7, wherein a position of an indication bit corresponding to at least one carrier in the second information, is indicated by a position of a bit with a first value in the first information, and the at least one carrier corresponds to the bit with the first value.

9. The method according to claim 8, wherein the first information comprises a fourth number of bits with the first value, and the fourth number is equal to the second number.

10. The method according to any one of claims 1 to 5, wherein the first information is sent via a higher layer signaling or a physical layer signaling.

11. A method for configuring indication information, comprising:
receiving, by a first user equipment (UE), first information sent by a network device, wherein the first information indicates a position of an indication bit corresponding to each of at least one carrier configured for the first UE in second information corresponding to the first UE; and
the second information comprises at least one of the indication bits, and the second information indicates whether to activate or deactivate a discontinuous transmission and reception mode of one or more carriers configured for one or more UEs, and the one or more UEs comprise the first UE.

12. The method according to claim 11, further comprising:
receiving, by the first UE, third information sent by the network device, wherein the third information comprises one or more pieces of the second information.

13. The method according to claim 12, further comprising:
receiving, by the first UE, fourth information sent by the network device, wherein the fourth information indicates a position of the second information corresponding to the first UE in the third information.

14. The method according to claim 12, wherein a number of bits comprised in different pieces of the second information is identical or different.

15. The method according to claim 12, wherein carriers corresponding to different pieces of the second information are completely identical, partially identical, or completely different.

16. The method according to any one of claims 11 to 15, wherein the second information comprises a first number of indication bits, and a second number of carriers corresponding to the second information are configured for the first UE, and the first number is greater than or equal to the second number.

17. The method according to claim 16, wherein the first information comprises a third number of bits, and the third number is equal to the first number.

18. The method according to claim 17, further comprising:
determining, by the first UE, a position of the indication bit corresponding to at least one carrier in the second information based on a position of a bit with a first value in the first information, wherein the at least one carrier corresponds to the bit with the first value.

19. The method according to claim 18, wherein the first information comprises a fourth number of bits with the first value, and the fourth number is equal to the second number.

20. The method according to any one of claims 11 to 15, wherein the first UE receives the first information sent by the network device via a higher layer signaling or a physical layer signaling.

21. A network device, comprising:
a transceiver module, configured to send first information to a first equipment (UE), wherein the first information indicates a position of an indication bit corresponding to each of at least one carrier configured for the first UE in second information corresponding to the first UE;
the second information comprises at least one of the indication bits, and the second information indicates whether to activate or deactivate a discontinuous transmission and reception mode of one or more carriers configured for one or more UEs, and the one or more UEs comprise the first UE; and
a processing module, configured to configure the first information or the second information.

22. A user equipment (UE), comprising a first UE, comprising:
a transceiver module, configured to receive first information sent by a network device, wherein the first information indicates a position of an indication bit corresponding to each of at least one carrier configured for the first UE in second information corresponding to the first UE;
the second information comprises at least one of the indication bits, and the second information indicates whether to activate or deactivate a discontinuous transmission and reception mode of one or more carriers configured for one or more UEs, and the one or more UEs comprise the first UE.

23. A network device, comprising:
one or more processors;
wherein the network device is configured to execute the method according to any one of claims 1 to 10.

24. A user equipment (UE), comprising:
one or more processors;
wherein the UE is configured to execute the method according to any one of claims 11 to 20.

25. A communication system, comprising:
a network device, configured to execute the method according to any one of claims 1 to 10, and a UE, configured to execute the method according to any one of claims 11 to 20.

26. A storage medium storing instructions, wherein the instructions, when executed on a communication device, cause the communication device to implement the method according to any one of claims 1 to 10, or to implement the method according to any one of claims 11 to 20.
